# EUROPEAN PATENT APPLICATION

(11) **EP 4 751 580 A1**
(43) Date of publication of application: **03.06.2026**
(21) Application number: 24845696.4
(22) Date of filing: 26.07.2024
(51) Int. Cl.: A23L 33/105, A23L 2/52

(54) **ACTIVITY IMPROVER AND FOOD AND DRINK FOR IMPROVING ACTIVITY**

(30) Priority: 27.07.2023 JP 2023122797
(71) Applicant: Asahi Group Holdings, Ltd., Tokyo 130-8602 (JP)
(72) Inventor: OKI, Koji, Moriya-shi, Ibaraki 302-0106 (JP); KATO, Naoki, Moriya-shi, Ibaraki 302-0106 (JP); OSAWA, Kazuhito, Moriya-shi, Ibaraki 302-0106 (JP); SUNAGAWA, Tadahiro, Moriya-shi, Ibaraki 302-0106 (JP); SAKANO, Katsuhisa, Moriya-shi, Ibaraki 302-0106 (JP); NAKAMURA, Chikako, Moriya-shi, Ibaraki 302-0106 (JP); NAKAMURA, Fumiya, Moriya-shi, Ibaraki 302-0106 (JP); OSUGA, Asako, Moriya-shi, Ibaraki 302-0106 (JP); WAKABAYASHI, Shona, Moriya-shi, Ibaraki 302-0106 (JP); MASUDA, Takahiro, Singapore 138492 (SG)
(74) Representative: Müller-Boré & Partner Patentanwälte PartG mbB
(86) International application number: PCT/JP2024/026816
(87) International publication number: WO 2025/023322

(57) **Abstract**

Provided is an activation enhancer containing a novel active ingredient. The activation enhancer contains nerol as an active ingredient. In one aspect, the activation enhancer may have a nerol content of 5 ppm to 30 ppm. The activation enhancer mat further contain water as a solvent.

## Description

### TECHNICAL FIELD

The present invention relates to an activation enhancer, and a food or beverage for enhancing activation.

### BACKGROUND ART

Neroli essential oil extracted from the flowers of bitter orange, which is an evergreen tree belonging to the family *Rutaceae*, is said to relieve anxiety, calm the mind, and give a deep sense of relaxation. Nerol, which is a component of neroli essential oil, is a colorless liquid with a sweet aroma resembling that of a rose, and is used as a fragrance and flavoring agent. Nerol is also extracted from lemongrass, hops and the like, in addition to neroli essential oil. For example, WO 2015/025902 proposes a method of producing an intranasal agent for regulating brain function that uses lemongrass extract, for improving the symptoms of Alzheimer's dementia. Further, JP 2021-512205 A discloses that a fragrance accord containing nerol improves sleep. In addition, "Functional Analysis of Lemongrass Aroma Components That Affect Brain Blood Flow" published in the "141-th Abstracts of the Annual Meeting of the Pharmaceutical Society of Japan, 29P, 01-119S, suggests the possibility that nerol and geraniol, which are aroma components contained in the extract of lemongrass cells, may contribute to the development of novel prevention and treatment methods for dementia, since the amount of brain blood flow increased significantly when humans are exposed to nerol and geraniol.

### SUMMARY OF THE INVENTION

### PROBLEMS TO BE SOLVED BY THE INVENTION

An object of one aspect of the present invention is to provide an activation enhancer containing a novel active ingredient.

### SOLUTIONS TO THE PROBLEMS

The first aspect is an activation enhancer containing nerol as an active ingredient. In one embodiment, the content of nerol, in the activation enhancer described above, may be 5 ppm or more and 30 ppm or less, and may contain water as a solvent. In one embodiment, the intake of nerol, in the activation enhancer described above, may be 1 mg or more and 6 mg or less per dose, and may be ingested orally.

In one embodiment, the activation enhancer described above may be one that reduces a foggy feeling, may be one that elevates mood, or may be one that enhances the electroencephalography (EEG) beta/alpha power ratio (β/α ratio).

The second aspect is a food or beverage for enhancing activation, containing nerol as an active ingredient. In one embodiment, the content of nerol, in the food or beverage for enhancing activation described above, may be 5 ppm or more and 30 ppm or less, and may contain water as a solvent. In one embodiment, the intake of nerol, in the food or beverage for enhancing activation described above, may be 1 mg or more and 6 mg or less per serving, and may be ingested orally.

In one embodiment, the food or beverage for enhancing activation may be one that reduces a foggy feeling, may be one that elevates mood, or may be one that enhances the EEG β/α ratio.

The third aspect is a method of enhancing activation in a subject, the method including allowing the subject to ingest the activation enhancer according to the first aspect described above. In one embodiment, the intake of nerol, in the method of enhancing activation, may be 1 mg or more and 6 mg or less per dose, and the method may be a method in which the activation enhancer described above is ingested orally.

### EFFECTS OF THE INVENTION

According to one aspect of the present invention, it is possible to provide an activation enhancer containing a novel active ingredient.

### BRIEF DESCRIPTION OF THE DRAWINGS

Fig. 1 shows a diagram illustrating the test procedure for subjective evaluation.
Fig. 2 shows the evaluation results obtained by the 9-point scale method using a psychological questionnaire with a 9-point scale ranging from "(psychological) sedation to (psychological) arousal", for the test beverage of Example 1, and illustrates the amount of change taking the value before the ingestion as 0.
Fig. 3 shows the results of evaluating the item "I feel foggy" by the VAS method using a psychological questionnaire, for the test beverage of Example 1, and illustrates the amount of change taking the value before the ingestion as 0.
Fig. 4 shows the results of evaluating the item "I am in an elevated mood" by the VAS method using a psychological questionnaire, for the test beverage of Example 1, and illustrates the amount of change taking the value before the ingestion as 0.
Fig. 5 shows the evaluation results obtained by the 9-point scale method using a psychological questionnaire with a 9-point scale ranging from "(psychological) sedation to (psychological) arousal", for the test beverage of Example 2, and illustrates the amount of change taking the value before the ingestion as 0.
Fig. 6 shows the evaluation results obtained by the 9-point scale method using a psychological questionnaire with a 9-point scale ranging from "(psychological) sedation to (psychological) arousal", for the test beverage of Example 3, and illustrates the amount of change taking the value before the ingestion as 0.
Fig. 7 shows the evaluation results obtained by the 9-point scale method using a psychological questionnaire with a 9-point scale ranging from "(psychological) sedation to (psychological) arousal", for the test beverage of Example 4, and illustrates the amount of change taking the value before the ingestion as 0.
Fig. 8 shows a diagram illustrating the test procedure for objective evaluation.

### DETAILED DESCRIPTION

In the present description, if multiple substances correspond to a component in a composition, the content of the component in the composition means the total amount of the multiple substances present in the composition unless otherwise specified. Further, upper limit and lower limit values that are described for a numerical range in the present specification can be arbitrarily selected and combined. Embodiments of the present invention will now be described in detail. The embodiments described below are exemplifications of an activation enhancer and so on, for embodying the technical ideas of the present invention, and the present invention is not limited to the activation enhancer and so on, described below.

### Activation enhancer

The activation enhancer contains nerol as an active ingredient. When a subject ingests the activation enhancer containing nerol, the activity is improved in the subject. In the present specification, the expression "the activity is improved" means, for example, that the state of psychological arousal is promoted in the subject. The term "psychological arousal" (hereinafter, also simply referred to as "arousal") as used herein refers to the state of excitement connected to a feeling, or energy expenditure associated therewith. The psychological arousal is usually closely related to people's evaluation on the importance of a certain event, and to the physical intensity of the stimulus of the event. The psychological arousal as described above is also illustrated by the Russell's circumplex model, which is to be displayed on a two-dimensional diagram with one axis representing the feeling ranging from "comfort to discomfort", and the other axis representing the feeling ranging from "arousal to sedation" (or from "activated to inactivated"). The ascending reticular activating system extending from the midbrain reticular formation to the cerebrum is said to be involved in the maintenance of the state of psychological arousal. Examples of the results of the subjective evaluation of whether or not the state of psychological arousal is promoted include whether or not the foggy feeling is reduced, and whether or not the elevated mood is promoted. The subjective evaluation can be carried out, for example, using a psychological questionnaire. For example, the subjective evaluation can be carried out by the 9-point scale method, based on a score ranging from "(psychological) sedation" to "(psychological) arousal" in stages. Whether or not the foggy feeling is reduced can be evaluated by the Visual Analogue Scale (VAS) method, based on the score of the item such as "I feel foggy" or the like. Whether or not the elevated mood is promoted can be evaluated by the VAS method, based on the score of the item such as "I am in an elevated mood" or the like. Further, examples of the results of the objective evaluation of whether or not the state of psychological arousal is promoted include whether or not the EEG β/α ratio. In a state in which the activity is improved, in the present specification, the physiological activity may be improved in combination, or alternatively, the psychological activity alone may be improved without a substantial improvement in the physiological activity. In other words, the activation enhancer may be a psychological activation enhancer.

The subject whose activity is to be improved by ingesting the activation enhancer may be, for example, a mammal such as a human, or an insect such as Drosophila. The subject may at least include a mammal, and the mammal may but need not include a human. In other words, the subject may be a mammal including a human, may be a human, or may be a non-human mammal.

The details of the mechanism for the improvement of activity due to the ingestion of the activation enhancer containing nerol are not known. However, for example, the effect of activating serotonin receptor 1A, or the like, is thought to be involved in the mechanism.

Nerol is one kind of monoterpene contained, for example, in essential oils extracted from lemongrass, hop and the like, and the IUPAC name of nerol is (Z)-3,7-dimethyl-2,6-octadien-1-ol (CAS No. 106-25-2). Nerol corresponds to the cis-isomer of geraniol. Nerol has a less rose-like note as compared to geraniol, and is said to have a fresh seaside scent. Nerol is used for a floral blend fragrance in combination with geraniol, and also used as a food flavoring.

In Japan, nerol is considered a food, not a pharmaceutical drug, and is classified as Class 7, aliphatic higher alcohols, as a designated food additive (No. 1923). A value of 191 mg/kg/day, which is obtained as the results of the repeated dose toxicity study on rats, can be exemplified as the lowest value of the no-observed adverse effect level (NOAEL) obtained in animal experiments of nerol. The acceptable daily intake (ADI) of nerol is calculated, for example, as 1.91 mg/kg/day, and is calculated as 95.5 mg/person/day, assuming an adult with a body weight of 50 kg. Further, no health hazard information has been reported at the current moment. Based on the above, nerol can be said as a compound whose safety as a food additive is guaranteed.

The content of nerol in the activation enhancer may be, for example, 5 ppm or more and 30 ppm or less. The content of nerol may preferably be 10 ppm or more, and 25 ppm or less. When the content of nerol is within the range described above, there is a tendency that the activity can be further improved.

The activation enhancer may further contain geraniol, which is the structural isomer of nerol, in addition to nerol. The content of geraniol in the activation enhancer is not particularly limited, as long as the effect of enhancing activation can be obtained. For example, the content of geraniol may be approximately in the same range as that contained in an available nerol as an impurity.

The activation enhancer may contain at least water as a solvent, in addition to nerol. For example, nerol can be more efficiently ingested when the activation enhancer contains water. The content of water in the activation enhancer may be, for example, 90% by mass or more and 99.9995% by mass or less, and preferably 99% by mass or more, or 99.997% by mass or more.

The activation enhancer can be prepared in a desired state, and may be in a liquid state, a solid state, a semi-solid state (such as a gel state) or the like.

The activation enhancer may further contain another active ingredient, in addition to nerol. The other active ingredient can be any component that has the effect of enhancing activation, the effect of improving and enhancing activity, or the like. The other active ingredient may be, for example, caffeine.

The activation enhancer may be one that does not substantially contain another active ingredient other than nerol. The expression "the activation enhancer does not substantially contain another active ingredient" means that the content of the other active ingredient is less than the amount that shows the effect of enhancing activation.

If necessary, the activation enhancer may contain a carbon dioxide gas, a flavoring agent, an acidulant, a sweetener, a colorant, an antioxidant, a pH regulator, any of various types of nutrient components and/or the like. These components will be described later in detail.

Further, the activation enhancer may be in any of the dosage forms such as powders, granules, tablets, capsules, lozenges, syrups, liquid preparations, injection liquids, and the like. The activation enhancer can be ingested by a method using a commonly used ingestion route, selected depending on the dosage form of the activation enhancer, and the like. The activation enhancer may be ingested, for example, orally. The activation enhancer is preferably ingested orally. The effect of enhancing activation can be obtained easily, when the activation enhancer can be ingested orally.

The intake of the activation enhancer in a subject may be, for example, 1 mg or more and 6 mg or less, and may preferably be 2 mg or more, or 5 mg or less per dose, in terms of the intake of nerol capable of providing the effect of enhancing activation in the subject. The activation enhancer may be ingested once or several times a day. The activation enhancer may be ingested, for example, for a period of one day or more, preferably one week or more, and more preferably one month or more.

The activation enhancer can be prepared by incorporating nerol into a composition having a desired composition. The method of incorporating nerol may be a method in which nerol itself is used to incorporate nerol into the composition, or a method in which an essential oil containing nerol or the like is used to incorporate nerol into the composition. The method of incorporating nerol can be selected as appropriate, depending on the composition of the composition into which nerol is to be incorporated.

### Food or Beverage for Enhancing activation

The food or beverage to be used for enhancing activation contains nerol as an active ingredient. The effect of enhancing activation can be obtained by ingesting the food or beverage containing nerol. The definition of the "food or beverage containing nerol" includes common foods and beverages, health foods and beverages, and functional foods and beverages. The food or beverage may preferably be a functional food or beverage. The term "functional food or beverage" refers to a food or beverage that provides a certain functionality to a living body. The definition of the "functional food or beverage" includes so-called health foods and beverages in general, such as, for example: foods and beverages with health functions, including foods and beverages for specified health uses (including conditional foods for specified health uses) and foods and beverages with nutrient function claims; foods and beverages for special dietary uses; nutritional supplementary foods and beverages; health supplementary foods and beverages; supplements (those in various types of dosage forms such as tablets, coated tablets, sugar-coated tablets, capsules and liquid preparations); and beauty foods and beverages (such as dietary foods and beverages). The definition of the "functional food or beverage" also includes health foods and beverages to which the health claims based on the food standards by Codex (the Joint FAO/WHO Food Standards Commission) are applied.

The food or beverage is not particularly limited. Examples of the food or beverage include: health foods and beverages (such as supplements, nutritional supplementary foods, health supplementary foods and nutritionally adjusted foods) in the form of tablet confectionaries, tablets, chewable tablets, powders, powders, capsules, granules and drink preparations; soft drinks, tea beverages, jelly beverages, sports drinks, coffee beverages, carbonated drinks, vegetable beverages, fruit juice beverages, fermented vegetable beverages, fermented fruit juice beverages, fermented milk beverages (such as yoghurt), lactic acid bacteria drinks, milk beverages, powder beverages and cocoa beverages; confectioneries (such as biscuits, cookies, chocolates, candies, chewing gums, gummy candies and tablets); and jellies.

The food or beverage may be a beverage having fluidity. In cases where the food or beverage is a beverage, the concentration of nerol in the beverage may be, for example, 5 ppm or more and 30 ppm or less, and may preferably be 10 ppm or more, or 25 ppm or less.

The beverage contains, for example, nerol, and a liquid medium such as water, fruit juice or the like. The beverage may be, for example: a tea beverage such as green tea, oolong tea or black tea; or a soft drink, a jelly beverage, a sports drink, a milk beverage, a carbonated drink, a vegetable beverage, a fruit juice beverage, a fermented vegetable beverage, a fermented fruit juice beverage, a fermented milk beverage (such as yoghurt), a lactic acid bacteria drink, a milk beverage (such as coffee-flavored milk or fruit-flavored milk), a powder beverage, a cocoa beverage or an alcohol beverage. The beverage may also be a beverage containing a composition, and containing milk, purified water or the like as a liquid medium.

The food or beverage may contain a sweetener to adjust the sweetness. The sweetener may be a saccharide, and the saccharide is not particularly limited as long as it is a commonly used saccharide. Examples of the saccharide include sugar, dextrose, fructose, fructooligosaccharides and galactooligosaccharides. Alternatively, a commonly used synthetic sweetener such as aspartame, saccharin or the like may be added to the food or beverage, instead of the saccharide. These sweeteners may be used singly, or in combination of two or more kinds thereof.

The food or beverage may contain an acidulant. The acidulant is not particularly limited as long as it is a commonly used acidulant. Examples of the acidulant include citric acid, malic acid, acetic acid, tartaric acid, gluconodeltalactone, gluconic acid, phosphoric acid, succinic acid, ascorbic acid, phytic acid and lactic acid; and salts thereof.
These acidulants may be used singly, or in combination of two or more kinds thereof.

The food or beverage may contain a flavoring agent. The flavoring agent is not particularly limited as long as it is a commonly used flavoring agent. Examples of the flavoring agent include: citrus oils, such as oils of lemon, lime and orange; orange oil; and herb extracts. The flavoring agent may be a natural flavoring agent or a synthetic flavoring agent. The natural flavoring agent is not particularly limited as long as it is a commonly used natural flavoring agent. Examples of the natural flavoring agent include anise oil, angelica oil, allspice oil, orange oil, cassia oil, capsicum oil, guarana extract, cardamom oil, caraway oil, cumin oil, clary sage oil, grapefruit oil, clove oil, coriander oil, coffee oil, cognac oil, cola nut extract, cinnamon oil, ginger oil, thyme oil, nutmeg oil, mint oil, vanilla extract, bitter almond oil, fenugreek oil, fennel oil, pepper oil, peppermint oil, perilla oil, bergamot oil, mandarin oil, eucalyptus oil, lemon oil and rosemary oil. These natural flavoring agents may be used singly, or in combination of two or more kinds thereof.

The synthetic flavoring agent is not particularly limited as long as it is a commonly used synthetic flavoring agent. Examples of the synthetic flavoring agent include allyl caproate, γ-undecalactone, ethyl vanillin, ethyl butyrate, ethyl phenylglycidate, eugenol, geraniol, diacetyl, cyclotene, cinnamic aldehyde, terpineol, δ-decalactone, decanal, nonanal, γ-nonalactone furaneol, furfuryl mercaptan, 2-hexenal, 3-hexenol, heliotropin, perillaldehyde, benzaldehyde, maltol, methyl anthranilate, methyl salicylate, menthol, α-ionone and linalool.

The food or beverage may contain a colorant. The colorant is not particularly limited as long as it is a commonly used colorant. Example of the colorant include caramel color. These colorants may be used singly, or in combination of two or more kinds thereof.

The food or beverage may contain an antioxidant. The antioxidant is not particularly limited as long as it is a commonly used antioxidant. Examples of the antioxidant include L-ascorbic acid and tocopherol. These antioxidants may be used singly, or in combination of two or more kinds thereof.

The food or beverage may contain a pH regulator. The pH regulator is not particularly limited as long as it is a commonly used pH regulator. Examples of the pH regulator include phosphoric acid and lactic acid. These pH regulators may be used singly, or in combination of two or more kinds thereof.

### Method of Enhancing activation

The method of enhancing activation includes allowing a subject to ingest the activation enhancer containing nerol. When a subject ingests the activation enhancer, the activity is improved in the subject by the effect of nerol, which is the active ingredient of the activation enhancer. The details of the composition of the activation enhancer are as described above.

In the method of enhancing activation, the activation enhancer may be ingested, for example, by a method such as oral ingestion, intranasal administration, parenteral administration, intravenous injection or intravenous drip infusion. The activation enhancer may preferably be ingested by oral ingestion.

In the method of enhancing activation, the intake of the activation enhancer may be, for example, 1 mg or more and 6 mg or less, and may preferably be 2 mg or more, or 5 mg or less per dose, in terms of the intake of nerol. The activation enhancer may be ingested once or several times a day.

The subject in the method of enhancing activation may be, for example, a mammal such as a human, or an insect such as Drosophila. The subject may at least include a mammal, and the mammal may, but need not, include a human. In other words, the subject may be a mammal including a human, may be a human, or may be a non-human mammal.

The present invention also includes the use of nerol in the production of the activation enhancer to be used in the method of enhancing activation, and the use of the activation enhancer containing nerol as an active ingredient, in the method of enhancing activation, as other aspects.

The inventions according to the present disclosure may include, for example, the following aspects.
[1] An activation enhancer comprising nerol as an active ingredient.
[2] The activation enhancer according to [1], wherein the content of nerol is 5 ppm or more and 30 ppm or less.
[3] The activation enhancer according to [1] or [2], further comprising water.
[4] The activation enhancer according to any one of [1] to [3], wherein the intake of nerol is 1 mg or more and 6 mg or less per dose.
[5] The activation enhancer according to any one of [1] to [4], wherein the activation enhancer is ingested orally.
[6] The activation enhancer according to any one of [1] to [5], wherein the activation enhancer reduces a foggy feeling.
[7] The activation enhancer according to any one of [1] to [6], wherein the activation enhancer elevates mood.
[8] The activation enhancer according to any one of [1] to [7], wherein the activation enhancer enhances the EEG β/α ratio.
[9] A food or beverage for enhancing activation, comprising nerol.
[10] A method of enhancing activation in a subject, the method comprising allowing the subject to ingest the activation enhancer according to any one of [1] to [8].
[11] The method of enhancing activation according to [10], wherein the intake of nerol is 1 mg or more and 6 mg or less per dose.
[12] The method of enhancing activation according to [10] or [11], wherein the activation enhancer is ingested orally.

### EXAMPLES

The present invention will now be described specifically with reference to Examples. However, the present invention is in no way limited to these Examples.

### Test Example 1 (Subjective Evaluation)

In Test Example 1, each subject was instructed to ingest each test beverage, and the subjective evaluation of each subject was obtained by a psychological questionnaire. In Test Example 1, the test was carried out as a single-dose crossover comparative study, on 42 healthy Japanese men and women with ages ranging from 20 years old to 39 years old, as the subjects. The test was carried out after obtaining a written informed consent from each subject. The test method in Test Example 1 and the results thereof are shown below.

### Test Method

In Test Example 1, a commercial drinking water (Comparative Example 1), and an aqueous solution (Example 1) obtained by incorporating nerol to the commercial drinking water (which is the same as that of Comparative Example 1) at a concentration of 10 ppm, were used as the test beverages, as shown in Table 1. The test was carried out twice with an interval of 12 hours or more, and each subject was instructed to ingest either one of the test beverages at random. The ingestion of the test beverage of Example 1 corresponds to the ingestion of 2 mg of nerol.

**[Table 1]**

| Raw material name | Comparative Example 1 | Example 1 |
|---|---|---|
| Commercial drinking water | 200mL | 200mL |
| Nerol | - | * 2mg |

| | | |
|---|---|---|
| * Dissolved in 200 mL of commercial drinking water | | |

In order to carry out the present test, the subjects were prohibited from drinking alcohol, exercising excessively and eating too much or too little, from the day before the test, and instructed to maintain the same time and quality of sleep as much as possible.

On the day of the test, the subjects were instructed to finish their meal at least two hours before the start time of the test, and were prohibited from ingesting anything other than water after two hours before the start of the test. In addition, the subjects were instructed to finish the ingestion of stimulants, such as chili pepper, as well as beverages containing caffeine, such as energy drinks, coffee, black tea and green tea, at least two hours before the start time of the test. Further, the subjects were instructed not to use any scented products, such as hair styling agents, hand creams and fabric softeners, and to receive each test dressed in similar clothes.

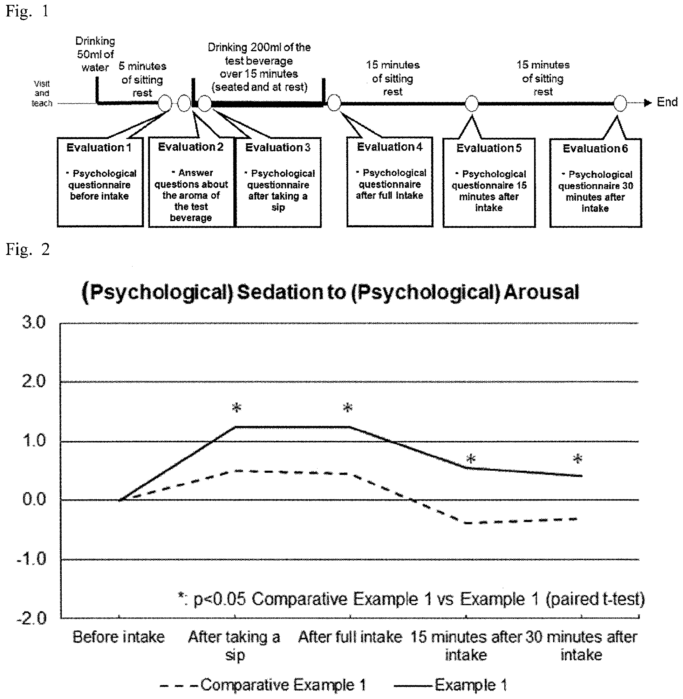

The procedure of the test is shown in Fig. 1. Each subject drank 50 mL of a commercial drinking water at the test site, and was instructed to wait 5 minutes at rest. Thereafter, each subject was instructed to ingest 200 mL of the test beverage of either Comparative Example 1 or Example 1 within 15 minutes, and to wait 30 minutes at rest after finishing drinking. Each subject was asked to answer a psychological questionnaire at the respective time points of: before the ingestion of the test beverage, after ingesting one sip of the beverage, after ingesting the entire amount of the beverage, 15 minutes after the completion of the ingestion, and 30 minutes after the completion of the ingestion. Subsequently, the psychological questionnaire was carried out in the same procedure, using a different test beverage from the test beverage ingested previously. The test beverage to be ingested was selected at random for each subject, and the test was carried out by allowing each subject to ingest each test beverage once.

The psychological questionnaire was carried out by the 9-point scale method and the VAS method. In the 9-point scale method, the subjects were asked to evaluate two items, namely, the feeling ranging from "comfort to discomfort", and the feeling ranging from "(psychological) sedation to (psychological) arousal". In the evaluation by the 9-point scale method, the subjects were explained in advance that the "(psychological) sedation" refers to a relaxed, calm, sluggish and/or sleepy state, and that the "(psychological) arousal" refers to an excited, enthusiastic, thrilled and/or awake state. The state of complete sedation of the subjects was evaluated as 1 point, the state of complete (psychological) arousal of the subjects was evaluated as 9 points, and the states between the (psychological) sedation and the (psychological) arousal were evaluated as 2 to 8 points, at an increment of one point. In the VAS method, the subjects were asked to evaluate 12 items, namely: "I feel relaxed", "I am in an elevated mood", "I feel like talking to someone", "I feel foggy", "I am concentrated", " I am calm", "I am sleepy", "I am physically exhausted", "I am psychologically exhausted", "I feel like my face temperature is high (my face feels warm)", "I feel like my body temperature is high (my body feels warm)", and "I have a burning sensation in my mouth or stomach".

### Test Results

The test results of Test Example 1 are shown in Figs. 2 to 4. In Test Example 1, the test of statistically significant difference between groups was carried out by a paired t-test of the mean values of the respective groups. A significance level of p < 0.05 was considered to indicate a significant difference, and p < 0.1 was considered to indicate a trend toward significance. In Test Example 1, data analyses were carried out using the SciPy library (ver. 1.6.2) in Python language. In each of the Test Examples hereinafter, the test of significant difference was carried out in the same manner, unless otherwise specified.

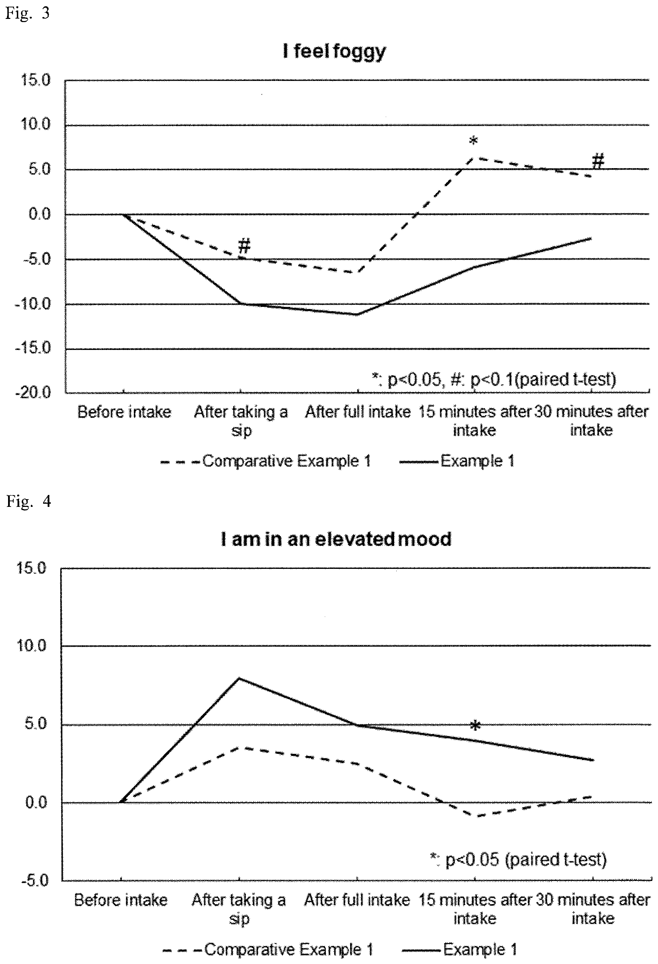

As shown in Fig. 2, the score of the transition from "(psychological) sedation to (psychological) arousal" was significantly higher 30 minutes after the ingestion, in the group of subjects who had ingested the test beverage of Example 1, as compared to that in the group of subjects who had ingested the test beverage of Comparative Example 1. Further, as shown in Fig. 3, the score of the item "I feel foggy" was significantly lower immediately after the ingestion, in the group of subjects who had ingested the test beverage of Example 1, as compared to that in the group of subjects who had ingested the test beverage of Comparative Example 1. In addition, as shown in Fig. 4, the score of the item "I am in an elevated mood" was higher 30 minutes after the ingestion, in the group of subjects who had ingested the test beverage of Example 1, as compared to that in the group of subjects who had ingested the test beverage of Comparative Example 1, confirming a trend toward significance. These results have confirmed the effect of enhancing activation (the effect of promoting the transition to the state of psychological arousal) by the ingestion of the test beverage of Example 1.

### Test Example 2 (Subjective Evaluation, Dosage Test 1)

In Test Example 2, each subject was instructed to ingest each test beverage, and the subjective evaluation of each subject was obtained by a psychological questionnaire. In Test Example 2, the test was carried out as a single-dose crossover comparative study, on 40 healthy Japanese men and women with ages ranging from 20 years old to 39 years old, as the subjects. The test was carried out after obtaining a written informed consent from each subject. The test method in Test Example 2 and the results thereof are shown below.

### Test Method

In Test Example 2, a commercial drinking water (Comparative Example 1), and a test solution (Example 2) obtained by incorporating nerol to the commercial drinking water (which is the same as that of Comparative Example 1) at a concentration of 30 ppm, were used as the test beverages, as shown in Table 2. The test was carried out twice with an interval of 12 hours or more, and each subject was instructed to ingest either one of the test beverages at random, each time. The ingestion of the test beverage of Example 2 corresponds to the ingestion of 6 mg of nerol. Hereinafter, the evaluation was carried out in the same manner as in Test Example 1.

**[Table 2]**

| Raw material name | Comparative Example 1 | Example 2 |
|---|---|---|
| Commercial drinking water | 200mL | 200mL |
| Nerol | - | * 6mg |

| | | |
|---|---|---|
| * Dissolved in 200 mL of commercial drinking water | | |

### Test Results

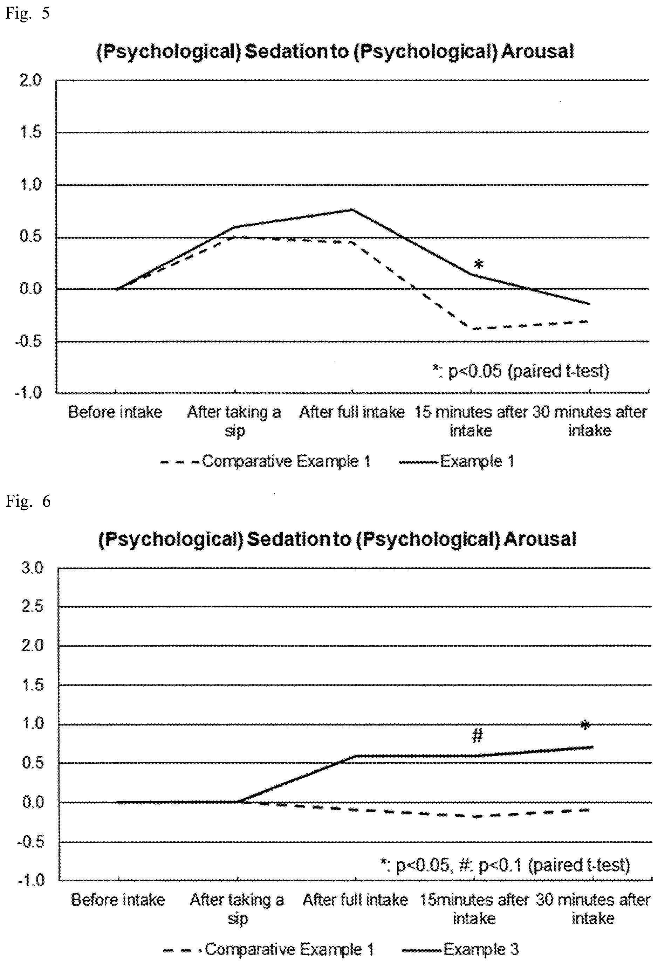

The test results of Test Example 2 are shown in Fig. 5. The score of the transition from "(psychological) sedation to (psychological) arousal" was significantly higher after the ingestion of the entire amount and 15 minutes after the ingestion, in the group of subjects who had ingested the test beverage of Example 2, as compared to that in the group of subjects who had ingested the test beverage of Comparative Example 1.

### Test Example 3 (Subjective Evaluation, Dosage Test 2)

In Test Example 3, each subject was instructed to ingest each test beverage, and the subjective evaluation of each subject was obtained by a psychological questionnaire. In Test Example 3, the test was carried out as a single-dose crossover comparative study, on eight healthy Japanese men and two healthy Japanese women with ages ranging from 26 years old to 61 years old, as the subjects for the ingestion of the test beverage of Example 3, and on nine healthy Japanese men and two healthy Japanese women with ages ranging from 26 years old to 61 years old, as the subjects for the ingestion of the test beverage of Example 4. The test was carried out after obtaining a written informed consent from each subject. The specific method of the present test and the results thereof are shown below.

### Test Method

In Test Example 3, a commercial drinking water (Comparative Example 1) was used as the test beverage, as shown in Table 3. In addition, an aqueous solution (Example 3) obtained by incorporating nerol to the commercial drinking water (Comparative Example 1) at a concentration of 5 ppm, and an aqueous solution (Example 4) obtained by incorporating nerol to the commercial drinking water (Comparative Example 1) at a concentration of 20 ppm, were also used as the test beverages. The test was carried out as a two-group crossover comparative study of the test beverage of Comparative Example 1 and other test beverages, and each subject was instructed to ingest either one of the test beverages of the two groups at random, with an interval of 12 hours or more. The ingestion of the test beverages of Example 3 and Example 4 corresponds to the ingestion of 1 mg and 4 mg of nerol, respectively. Hereinafter, the evaluation was carried out in the same manner as in Test Example 1.

**[Table 3]**

| Raw material name | Comparative Example 1 | Example 3 | Example 4 |
|---|---|---|---|
| Commercial drinking water | 200mL | 200mL | 200mL |
| Nerol | - | 1mg^{*} | 4mg^{*} |

| | | | |
|---|---|---|---|
| * Dissolved in 200 mL of commercial drinking water | | | |

### Test Results

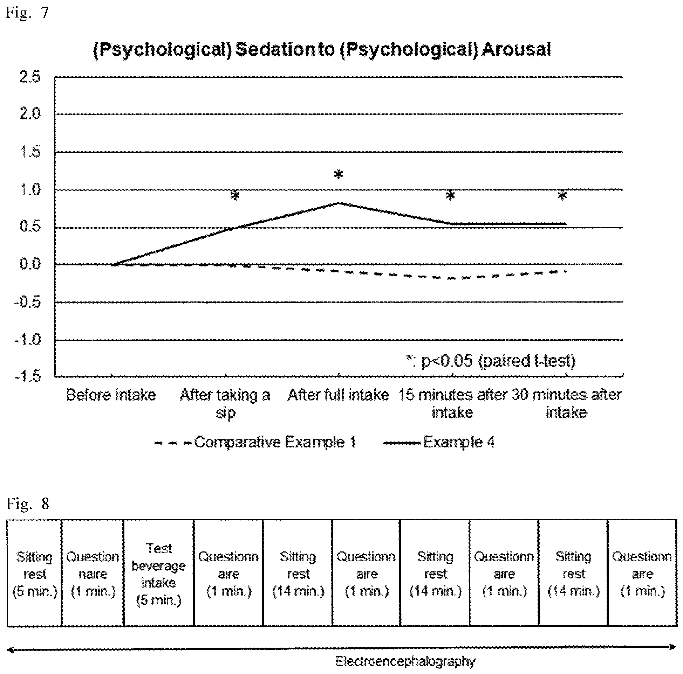

The results of ingesting the test beverage of Example 3 or Example 4 are shown in Fig. 6 or Fig. 7. The score of the transition from "(psychological) sedation to (psychological) arousal" was significantly higher in the group of subjects who had ingested the test beverage of Example 3 or Example 4, as compared to that in the group of subjects who had ingested the test beverage of Comparative Example 1. The above results have confirmed the effect of enhancing activation by the ingestion of the test beverage of Example 3 or Example 4.

Based on the results of Test Example 2 and Test Example 3, it is thought that the effect of enhancing activation (the effect of promoting the psychological arousal) provided by nerol is particularly intensely exhibited at a concentration of from 5 ppm to 30 ppm.

### Test Example 4 (Objective Evaluation, EEG Test)

In Test Example 4, each subject was instructed to ingest each test beverage, and the EEG of each subject were measured. In test Example 4, the test was carried out as a single-dose crossover comparative study, on 24 men and women equal to or older than 20 years old and younger than 35 years old, as the subjects. The test was carried out after obtaining a written informed consent from each subject. The test method in Test Example 4 and the results thereof are shown below.

### Test Method

In Test Example 4, a commercial drinking water (Comparative Example 1), and a test solution (Example 1) obtained by incorporating nerol to the commercial drinking water (which is the same as that of Comparative Example 1) at a concentration of 10 ppm, were used as the test beverages, as shown in Table 1. The test was carried out twice with an interval of 12 hours or more, and each subject was instructed to ingest either one of the test beverages at random, each time. The ingestion of the test beverage of Example 1 corresponds to the ingestion of 2 mg of nerol.

In order to carry out Test Example 4, the subjects were prohibited from drinking alcohol, exercising excessively and eating too much or too little, from the day before the test, and instructed to maintain the same time and quality of sleep.

On the day of the test, the subjects were instructed to finish their meal at least two hours before the start time of the test, and were prohibited from ingesting anything other than water after two hours before the start of the test. In addition, the subjects were instructed to refrain from ingesting stimulants, such as chili pepper, as well as beverages containing caffeine, such as energy drinks, coffee, black tea and green tea, on the day of the test. Further, the subjects were instructed not to use any scented products, such as hair styling agents, hand creams and fabric softeners, and to receive each test dressed in similar clothes.

The EEG were measured in accordance with the conditions shown in Fig. 8. Each subject was instructed to wear an electroencephalograph (model number: HARU-2, manufactured by PGV Co., Ltd.), and to wait for 5 minutes at rest, and then asked to answer a questionnaire for one minute. Subsequently, each subject was instructed to ingest 200 mL of the test beverage within 5 minutes, and thereafter, to wait at rest except for answering the questionnaire for one minute immediately after the ingestion, 15 minutes after the ingestion, 30 minutes after the ingestion and 45 minutes after the ingestion. The EEG were measured from before the ingestion of the test beverage until 45 minutes after the ingestion. The same measurement was carried out one more time. The beverage to be ingested was selected at random for each subject, and each subject was instructed to ingest each beverage once.

In the analysis of EEG, the data obtained during the questionnaires and the ingestion that affect the EEG were excluded from the analysis target. The EEG measured during each waiting time at rest before and after the ingestion were analyzed using the MNE library (ver. 1.3.0) in Python language, and the β/α ratio was calculated from the two-minute data. No exclusion of target data was allowed, and all cases were analyzed as the target.

### Test Results

The test results of Test Example 4 are shown in Table 4. In Test Example 4, the test of statistically significant difference between groups was carried out by a paired t-test of the mean values of the respective groups. A significance level of p < 0.05 was considered to indicate a significant difference. In Test Example 4, data analyses were carried out using the SciPy library (ver. 1.6.2) in Python language, and Microsoft Excel.

**[Table 4]**

| β/α ratio | | |
|---|---|---|
| Example | Before intake | 17-18 minutes after intake |
| Comparative Example 1 | 1.351 ± 0.717 | 1.020 ± 0.815 |
| Example 1 | 1.291 ± 0.865 | 1.149 ± 0.726 * |

| | | |
|---|---|---|
| Mean ± standard deviation * p<0.05: Comparative Example vs. Example (paired t-test) | | |

As shown in Table 4, it has been confirmed that the β/α ratio during the period of from 17 minutes to 18 minutes after the completion of the ingestion was significantly higher in the group of subjects who had ingested the test beverage of Example 1, as compared to that in the group of subjects who had ingested the beverage of Comparative Example 1 (p < 0.05). The above results were the same as the timing at which an improvement was observed in the psychological evaluation in Example 1.

According to Cunningham et al. (Journal of Mental Imagery, 2000, 24 (1&2), 61-72), an increase in the β/α ratio reflects an improvement in the physiological arousal. Therefore, the results of Test Example 4 made it possible to confirm the fact that the activity of the subject has been improved, namely, the psychological arousal has been promoted, by the ingestion of the test beverage of Example 1, even with the use of an objective physiological index.

### Reference Example

The test was carried out in the same manner as in Test Example 4, using a 10-ppm aqueous solution of each of: geraniol, which is the isomer of nerol; α-terpineol, which is a degradation product of nerol; and linalool, on 20 healthy Japanese men and women with ages ranging from 20 years old to 39 years old, as the subjects. As a result, the effect of enhancing activation was not observed in any of geraniol, α-terpineol and linalool.

### Production Example 1

A food or beverage for enhancing activation, which is a beverage, was prepared in accordance with the composition shown in Table 5.

**[Table 5]**

| Raw material name | Content | Unit |
|---|---|---|
| Sucralose | 0.02 | g |
| Citric acid | 0.1 | g |
| Trisodium Citrate | 0.076 | g |
| Nerol | 2.0 | mg |
| Commercial drinking water | 200 | mL |

### Production Example 2

A food or beverage for enhancing activation, which is a beverage, was prepared in accordance with the recipe shown in Table 6.

**[Table 6]**

| Raw material name | Content | Unit |
|---|---|---|
| Sucralose | 0.02 | g |
| Citric acid | 0.1 | g |
| Trisodium Citrate | 0.076 | g |
| Nerol | 2.0 | mg |
| Commercial carbonated water | 200 | mL |

The disclosure of Japanese Patent Application No. 2023-122797 (filing date: July 2, 2023) is incorporated herein by reference in its entirety. All documents, patent applications, and technical standards cited in the present description are incorporated herein by reference to the same extent as in cases where the individual documents, patent applications, and technical standards are specifically and individually described to be incorporated by reference.

## Claims

1. An activation enhancer comprising nerol as an active ingredient.

2. The activation enhancer according to claim 1, wherein the content of nerol is 5 ppm or more and 30 ppm or less.

3. The activation enhancer according to claim 1 or 2, further comprising water.

4. The activation enhancer according to any one of claims 1 to 3, wherein the intake of nerol is 1 mg or more and 6 mg or less per dose.

5. The activation enhancer according to any one of claims 1 to 4, wherein the activation enhancer is ingested orally.

6. The activation enhancer according to any one of claims 1 to 5, wherein the activation enhancer reduces a foggy feeling.

7. The activation enhancer according to any one of claims 1 to 6, wherein the activation enhancer elevates mood.

8. The activation enhancer according to any one of claims 1 to 7, wherein the activation enhancer enhances the EEG β/α ratio.

9. A food or beverage for enhancing activation, comprising nerol.

10. A method of enhancing activation in a subject, the method comprising allowing the subject to ingest the activation enhancer according to any one of claims 1 to 8.

11. The method of enhancing activation according to claim 10, wherein the intake of nerol is 1 mg or more and 6 mg or less per dose.

12. The method of enhancing activation according to claim 10 or 11, wherein the activation enhancer is ingested orally.
